# EUROPEAN PATENT APPLICATION

(11) **EP 1 481 787 A1**
(43) Date of publication of application: **01.12.2004**
(21) Application number: 03011980.4
(22) Date of filing: 28.05.2003
(51) Int. Cl.: B29C 49/42, B29B 11/14, C08J 7/06

(54) **Method of conditioning thermoplastic polymer packages**

(71) Applicant: ECOLAB INC., St. Paul Minnesota 55102 (US)
(72) Inventor: Anderheggen, Bernd, 42781 Haan (DE); Schneider, Michael, 41363 Jüchen (DE); Selbertinger, Josef, 83224 Staudach-Egerndach (DE)
(74) Representative: Sternagel, Fleischer, Godemeyer & Partner

(57) **Abstract**

The present invention relates to a method of conditioning thermoplastic polymer packages, which are molded from thermoplastic preforms comprising the steps of:
d) providing a solution with 0.1 to 15.0 wt-% of an antistatic composition
e) contacting the thermoplastic preform with the antistatic composition on the outer surface,
f) blow molding the molded package from the preform by a molding process directly after steps a) and b) or alternatively in a later separate process step.

Furthermore the invention relates to the use of an antistatic composition as a solution for the conditioning treatment of polyester molds and/or polyester preforms.

## Description

### Field of the invention

The invention relates to a method of conditioning thermoplastic polymer packages which are molded from thermoplastic preforms. The invention further relates to the use of a solution comprising an antistatic composition for the conditioning treatment of polyester molds and/or polyester preforms. Using the method of the invention polyester preforms can be easily packed and blow molded to the corresponding packages like bottles, especially PET bottles for use in the food industry, non-food industry, cosmetic industry and for soft-drinks.

### Background of the invention

Polyester preforms, especially PET preforms are used for the preparation of bottles which are used for a large scale of different solid and liquid food and non-food products like water, soft-drinks, milk, oil, or cosmetics. For the production of the bottles different known technologies are used, like extrusion blow molding, stretch blow molding, and injection blow molding. The blow molding process is carried out by heating the preforms up to a temperature from 130 to 180 °C and blowing the bottle from the preform.

The preform is packed and distributed to the companies producing the bottles from the preform and filling the bottles with the products. The main advantage of the PET bottles is the much lower weight so that containers with PET bottles are easy to carry. This is the reason why more and more glass bottles are changed to PET bottles.

However, during the productions of the preforms and the PET bottles some technical problems occur. The preforms are produced in a molding machine. After the preforms leave the molding machine the preforms tend to stick together so that they can not be further handled in an automatic processing machine with conveyor belts. A further problems is that the preforms can not be packed in a minimum volume because they stick together. This effect has a direct influence on the transport of the preforms because the producer can not effectively use the whole volume of the packages and about 30 % of the volume of the packages is not used. A further problem arises when the preforms are blow molded to the bottles because it is very difficult to remove the single preform for the further processing from the package. The same applies to the blow molded bottles. They also tend to stick together and are difficult to handle during the filling process, the packaging process and the rinsing process of the reused bottles.

In the state of the art no solution for this problem is known. For the treatment of polyolefin it is state of art to spray or dip the polyolefin bottles in mineral oil emulsion or fatty emulsion or quaternary ammonium compounds in combination with alcohol. However, this conditioning process has severe drawbacks for the processability of the preforms and the bottles. For example, if a mineral oil is used a film is build on the surface of the bottles. This film can cause problems when the preforms are blow molded. The mineral oil film leads to deposits in the blow molding machine. These deposits attract dirt and dust and negatively influence the blow molding process of the preforms. The same applies to the mineral oil film on the surface of the bottles made from the performs, where also dust and dirt is deposited. This causes severe technical problems when the bottles are labelled and also when they are filled with products in the case of food and beverage products because in this case the high hygienic standard cannot be met.

A further drawback is the temperature stability problem. If the substances which are used on the surface of the preforms are not temperature-stable they can decompose during the blow molding process or lead to a decomposition of the polyester compounds for example by stress cracking.

From the state of the art solutions to avoid these drawbacks are not known with respect to polyester preforms and polyester bottles. Not too much is known about the reasons for the sticking problems of polyester preforms and polyester bottles. It is believed that this phenomenon does not only relate to the static behaviour of the polyester preforms and bottles but also to other properties of the materials which are not fully known.

From the state of the art several anti-static compounds are known which are used for the cleaning of statically chargeable surfaces or anti-static treatment of surfaces.

WO98/38274 A2 concerns a method of cleaning statically chargeable surfaces wherein an anti-static aqueous cleaning agent is applied to the surface to be cleaned and is then allowed to drain off. The anti-static composition is made from a concentrate which contains between 1 and 12 wt-% of one or a plurality of alkoxylated primary or secondary amines, between 1 to 10 wt-% of a fatty acid salt and between 2 and 12 wt-% of one or a plurality of weakly foaming non-ionic surfactants. The remainder being water or an aqueous solution containing further auxiliary and active substances. This agent is used for the cleaning of plastic objects in the food stuff industry. In the examples cleaning and anti-static treatment of PVC samples is described.

WO94/05760 A1 describes the cleaning and anti-static treatment of polyolefin plastic surfaces by an aqueous solution containing 0.01 to 1 % by weight of a combination of at least one alkoxylated alkylamine and at least one polyethylene glycol sorbitan ester. The ratio by weight between the components alkylamine and polyethylene glycol sorbitan ester is in a range from 3 : 1 to 1 : 3. The solution is preferably used for the anti-static treatment of polyolefin plastic transport containers which are used in the food stuff industry in particular the beverage, bakery, meat and fish industry. Through the treatment soil particles which electro-statically adhere to such transport containers are detached and resoiling of the transport containers is efficiently prevented.

### Summary of the invention

The technical object of the invention is to provide a method of conditioning thermoplastic polymer packages which reduces the tendency of the polymer packages and thermoplastic preforms to stick together and lead to a better processability of packages and preforms. Furthermore package problems for the preforms should be avoided so that the whole volume of the packaging container can be used without wasting packaging volume.

This technical object is solved by a method of conditioning thermoplastic polymer packages which are molded from thermoplastic preforms comprising the steps of
A) providing a solution with 0,1 to 15,0 weight-% of an anti-static composition.
B) contacting the thermoplastic preform with the anti-static composition on the outer surface.
C) Blow molding the molded package from the preform by a molding process directly after steps A and B or alternatively in a later separate process step.

### Detailed description of the invention

By applying the method of the invention, preforms and thermoplastic polymer packages can be produced which do not stick together and can easily be processed and filled.

Furthermore, the problems which occurred, when using, for example, a mineral oil or an oil emulsion on the preform can be avoided. The anti-static composition according to the invention is an aqueous solution of a compound selected from the group consisting of sorbitan esters, polysorbates, alkylsulphonates or mixtures thereof.

In a preferred embodiment the solution is an aqueous solution.

The anti-static composition is temperature-stable and does not influence the blow molding process for the production of the polyester bottles from the preform. Furthermore the composition does not form an oily film on the preform or the bottles. Nevertheless, it has very good anti-sticking properties and no stress cracking effect occurs. Furthermore the used anti-static substances have FDA approval and can also be used in the food area without any restrictions. It was found that even after the blow molding process the final PET bottles did not show any electrostatic effects so that dirt or dust was deposited on the surface.

Furthermore by using the method according to the invention it was possible to solve the packing problems of the preforms. Now the total volumes of the container can be used and the shipping costs for the preforms are decreased.

The same applies to the labeling process of the bottles. It was found that bottles which are made from the preforms and conditioned by the method according to the invention can easily be labeled without any technical problems. Compared to the conditioning system of the state of the art, this is a strong advantage. In the conditioning system of the state of the art with oil emulsions or mineral oils the labeling of the bottles was often impossible or could only be performed after a cleaning step of the surface of the bottles.

The thermoplastic polymer can be a poly-condensation polymer or a poly-addition polymer. The conditioning method can be used for thermoplastic polymer packages which are molded from thermoplastic preforms. In a preferred embodiment the polymer is selected from the group consisting of poly(ethylene terephthalate), poly(ethylene naphthalate), poly(butylen terephthalate), polycarbonate, polystyrene, or polyvinylchloride or copolymers thereof. As the sorbitan ester preferably a mono-, di-, tri- or sesquisorbitan ester of a fatty acid having one or more C₈-C₁₈ alkyl groups and/or C₈-C₁₈ alkenyl groups is used. A sorbitan ester which is highly preferred is selected from the group consisting of sorbitan monostearate, sorbitan tristearate, sorbitan monolaurate, sorbitan monooleate, sorbitan palmitate or mixtures thereof. The polysorbate is preferably an ethoxylated mono-, di-, sesqui- or trisorbitan ester having 1 to 30 ethylenoxid units and saturated or non-saturated C₆ - C₂₂ acyl groups. Preferably the polysorbate is selected from the group consisting of polyoxyethylen sorbitan monolaurate, polyoxyethylen sorbitan monopalmitate, polyoxyethylen sorbitan monostearate, polyoxyethylen sorbitan monooleate, polyoxyethylen sorbitan tristearate, polyoxyethylen sorbitan trioelate or mixtures thereof. The alkyl sulfonate is preferred an n-alkyl sulfonate

Furthermore the anti-static composition contains certain additives for example, 0,05 to 70,0 weight-% of an organic or inorganic acid, preferably formic acid as a preservative. Also other kinds of known preservatives can be used.

Thermoplastic preforms are molded from the polymers. These preforms are in the sense of the invention hollow molds which are processed to the package in a blow molding process step. Also the packages are defined as hollow bodies which are used to store fluids or solid products.

The anti-static composition can be contacted with a preform or bottle by spraying it onto the surface, especially by spraying through jet nozzles. A further possibility is that the preform is contacted with the anti-static composition by dipping the preform into the solution of the anti-static composition.

It is preferred to use jet nozzles which give a fine, gentle mist-like spray of the anti-static composition. The necessary volume is sprayed onto the surface of the preform in such a low volume and intensity that it is ensured that the desired surface is completely covered and the anti-static composition is even and completely distributed over the surface of the preform. A further possibility is that the anti-static composition is sprayed onto the inner contour of the preform molding machine. During the molding process the product is then applied from the inner contour of the molding machine to the molded preform.

In an alternative process the preforms are first molded and afterwards sprayed in a separate process step. This can, for example, be done by leading the molded preforms through a mist chamber in which the anti-static product is present in a fine mist.

Furthermore the invention relates to the use of a solution comprising 0,1 to 15,0 weight-% of an anti-static composition which is used for the conditioning treatment of polyester molds and/or polyester preforms. The composition comprises preferably a compound selected from the group consisting of sorbitan esters, polysorbates, alkylsulfonates or mixtures thereof.

As polyesters polyester selected from the group consisting of poly(ethylene terephthalate), poly(ethylene naphthalate), poly(butylen terephthalate) and polycarbonate can be used. As the sorbitan esters mono-, di-, sesqui-, or trisorbitan esters of a fatty acid having one or more C₈-C₁₈ alkyl groups and/or C₈-C₁₈ alkenyl groups can be used.

The sorbitan ester is preferably selected from the group consisting of sorbitan monostearate, sorbitan tristearate, sorbitan monolaurate, sorbitan monooleate, sorbitan palmitate or mixtures thereof. In an especially preferred embodiment the polysorbate is an ethoxylated mono-, di-, sesqui-, or trisorbitan ester having 1 to 30 ethylenoxid units and one or more saturated or non-saturated C₆-C₂₂ acyl groups. Preferably the polysorbate is selected from the group consisting of polyoxyethylen sorbitan monolaureate, polyoxyethylen sorbitan monopalmitate, polyoxyethylen sorbitan monostearate, polyoxyethylen sorbitan monooleate, polyoxyethylen sorbitan tristearate, polyoxyethylen sorbitan trioelate or mixtures thereof. Furthermore as an anti-static composition also an alkyl sulfonate for example n-alkyl sulfonate can be used.

The anti-static composition can further contain usual additives of the state of the art, for example, preservatives like organic or inorganic acids in an amount of 0,05 to 70,0 weight-%, preferably formic acid.

In a preferred embodiment the conditioning composition according to the invention can contain further additives, for example, alkali compounds, gelating agents, builder, additional anionic or non-ionic surfactants, solubilizers, enzymes, preservatives, colouring agents and perfumes. As additional alkaline additives sodium or potassium carbonates as well as sodium or potassium silicates can be used. Suitable chelating agents are, for example, sodium salts of ethylene diamine tetra acetic acid (EDTA) or nitrilotriacetic acid (NTA) or alkalimetal salts of anionic polyelectrolytes like polyacrylate, polymaleate and polysulfonate. Furthermore suitable low molecular hydroxycarboxylic acids like citric acid, tartaric acid, mellic acid, or gluconic acid can be used. Suitable complexing agents can be selected from the group comprising organo-phosphonates, for example 1-hydroethane-1,1 diphosfonic acid (HEDP) amino-tri(methylene-phosphonic acid), diethylenetriaminepenta(methylenephosphonic)acid and 2-Phosphonobutane-1,2,4,tricarboxylic acid (PBS-AM).

The above mentioned complexing agents especially the polycarboxylates can be used also because of their builder properties. Builder are beside surfactants important components in washing and cleaning agents (see Ullmann's encyclopedia of industrial chemistry, 05^{th} edition, volume A8 (1987), page 350 to 357.) They have the function of alkalising the cleaning agent, binding of water hardness and dispersion of dirt. Builder which are known from the state of the art and are used in the present invention are monomer or oligomer phosphates, for example monophosphates, pyrophosphates, triphosphates and cyclic or polymeric metaphosphate. Further groups of anorganic builder comprise carbonates, hydrogen carbonates, borates and silicates, preferably those with a mole ratio SiO₂: M₂O (M = alkali metal) in the range of 0.5 to about 4, preferably from 1.0 to about 2.4. Organic builders can preferably be chosen from polymers and co-polymers of acrylic acid, α-hydroxy acrylic acid, maleic acid, allylalcohol. Furthermore poly(tetramethylene 1,2 dicarboxylate) and poly(4-methoxytetramethylene 1,2 dicarboxylate) can also be used. The above mentioned inorganic and organic builder are used in the form of their water-soluble salts, preferably their sodium or potassium salts.

As solubilizers monoalcohols or polyalcohols can be used as well as alkanolamines or glycoether if the substances are mixable with water in the used concentration range. Preferably compounds are used as solubilizers selected from the group consisting of ethanol, n- or i-propanol, butanol, glycol, propane or butandiol, glycerine, diglycol, propyl- or butyldiglycol, ethyleneglycolmethylether, ethyleneglycolethylether, ethyleneglycolpropyether, ethyleneglycolmono-n-butylether, diethlyeneglycolmethylether, diethlyeneglycolethylether, propyleneglycolmethylether, propylenegylcolethylether or propyleneglycolpropylether, dipropyleneglycolmethylether or dipropyleneglycolethylether, methoxytriglycol, ethoxytriglycol or butoxytriglycol, 1-butoxyethoxy-2-propanol, 3-methyl-3-methoxybutanol, propyleneglycol-t-butylether or mono-, di-, and triethanolamine as well as mixtures of these solubilizers

Furthermore the conditioning agent can contain sequestering agents which are described in J. Falbe, "Surfactants in consumer products, Springer verlag 1997, pages 256 to 260 or Ullmann's encyclopaedia of industrial chemistry, 05^{th} edition, volume A8 (1987), pages 351 to 354. In the sense of the present invention suitable sequestering agents are preferably selected from the group of the following compounds: oligocarboxylic acids, polycarboxylic acids, hydroxycarboxylic acids, phosphonic acids, water soluble salts of their acids and alkali metalpolyphosphates, as examples the following acids are mentioned which are part of the above classes of compounds: aminopolycarboxylic acid like ethylenediaminetetraacetic acid, nitrilotriacetic acid or diethylenetriaminpentaacetic acid, oxalic acid, citric acid, glyconic acid or lactic acid, phosphonic acid like 1-hydroxyethene-1,1-diphosphonic acid, aminotris(methylenephosphonic acid) or 2-phosphonobutane-1,2,4-tricarbonic acid. As water soluble salts of these acids alkali metal salts can be used, preferably its sodium salts. Suitable alkali metal polyphosphates are for example sodium diphosphate or preferably sodium triphosphate. In the sense of the present invention the preferred sequestering agents used are the named phosphonic acid and the mentioned sodium salts whereby these phosphonic acid can also be used in combination with hydroxycarboxylic boxylic acids. This is in particular important if the use of phosphor-free or low phosphor formulations is desirable.

In the present application the conditioning agent is sprayed on the preforms or the polymer bottles. For spraying application it is often desirable to add to the solution a defoaming agent to avoid or suppress the development of foam during the spraying application. With respect to the selection of suitable defoaming agents it is made reference to Ullmann's encyclopedia of industrial chemistry, 05^{th} edition, volume A11, (1988), page 465 to 490. The defoaming agents mentioned therein can be added to the conditioning agents of the invention in amounts from 0.05 to 0.2 wt-%. Suitable defoaming agents are for example: molecular complexes of ethyleneoxide and propyleneoxide with fatty alcohols and preferably fatty alcohol-polyethyleneglycolether which are blocked at the end group, for example C₁₂-fatty alcohol-polyethyleneglycol-butylether with an ethoxylation grade of about 9.

The following examples and data further illustrate the practice of the invention and should not be taken as limiting the invention and contains the best mode. The following examples and data show the effectiveness of the invention for the conditioning treatment of thermoplastic polymer packages which are molded from thermoplastic preforms.

### Examples

### 1. Preparation of conditioning agent

The conditioning agent was prepared by mixing the amount of the components specified in table 1. With the resulting solution the following tests were carried out which show the advantageous effect of the conditioning agent according to the invention.

**Table I:**

| Composition of conditioning agents | | | | | | | | | |
|---|---|---|---|---|---|---|---|---|---|
| Component | Ex 1 | Ex 2 | Ex 3 | Ex 4 | Ex 5 | Ex 6 | Ex 7 | Ex 8 | Ex 9 |
| 1. water | 99.0 | 99.6 | 99.7 | 99.8 | 99.0 | 99.5 | 99.5 | 99.6 | 99.7 |
| 2. polyoxyethylene sorbitan-monolaurate (Tween 20) | | 0.4 | 0.3 | 0.2 | | | | | |
| 3. polyoxyethylene sorbitan-monooleate (Tween 80) | | | | | 1.0 | 0.5 | | | |
| 4. n-alkanesulfonate (Atmer 190) | 1.0 | | | | | | 0.5 | 0.4 | 0.3 |
| all units in wt-% | | | | | | | | | |

### 2. Conditioning effect on surface and polymer bottles

### a.) conditioning efficacy

To evaluate the conditioning effect of selected raw materials on plastic surfaces a test according to "F&B Europe R&D test method 57-1, Cleaning Efficacy" was done. For this test a plastic sample is treated with a conditioning agent and scrubbed with a towel after drying to charge the surface. Standard samples were treated accordingly without application of conditioning solution. For evaluation the sample is placed approx. 1 cm above graphite. Depending on the conditioning effect of the used raw material/product, the surface attracts a characteristic amount of graphite. The following ratings are possible:
- ++: no static charge
- +: slight static charge (up to 10% coverage of surface)
- 0: static charge (10-50% coverage of surface)

- -: high static charge 50-70% coverage of surface)
- - -: very high static charge (more then 70% coverage of surface)

b.) The application of the conditioning agent is carried out by
dipping: The plastic sample is dipped into the solution of the conditioning agent and air dried.
spraying The plastic sample is placed into the cabinet and the solution of the conditioning agent is applied by spraying with two-component-nozzles.
High temperature conditions To simulate the process of blow molding and to evaluate the influence of high temperatures on the conditioning agent, the plastic sample was treated as described under spraying and then placed into a oven at 100°C for 10 minutes. Afterwards the conditioning effect was tested.
Sustainability of conditioning effect To evaluate a potential long term conditioning effect the plastic samples have been evaluated directly after drying, after flushing with water, after 24 hours and after 1 week, respectively
Also the draining properties have been evaluated.

**Table 2:**

| conditioning effect on surface of preforms | | | | | | | | | |
|---|---|---|---|---|---|---|---|---|---|
| application | Ex. 1 | Ex. 2 | Ex. 3 | Ex. 4 | Ex. 5 | Ex. 6 | Ex. 7 | Ex. 8 | Ex. 9 |
| dipped/ dried | ++ | ++ | ++ | ++ | ++ | ++ | ++ | ++ | ++ |
| sprayed with two component nozzles | ++ | 0 | 0 | 0 | - | - | - | + | + |
| after 24h | ++ | ++ | ++ | ++ | ++ | ++ | ++ | ++ | ++ |
| after 1 week | ++ | + | - | - | + | + | + | + | - |
| after 10 min at 100°C | ++ | ++ | ++ | ++ | ++ | ++ | ++ | ++ | ++ |
| wetting property | super | super | super | super | super | super | super | super | super |
| draining property | midgood | super | super | super | super | super | good | good | good |
| evaluation: ++ = antistatic efficacy/no static affinity; + = slight antistatic efficacy/slight static affinity (up to 10%); 0 = static affinity (>10 to 50%); -- = static affinity (>50 to 70%); | | | | | | | | | |

From table 2 can bee seen that when PET preforms are treated with a conditioning agent of the invention the sticking together of the preforms and the amount of graphite on the surface of the preforms can be strongly reduced. Furthermore it was found that preforms which are treated can be easily blow molded to the corresponding bottles.

### 3.)Corrosion tests

It is also important that the conditioning agent does not lead to a decomposition of the polymer preform or polymer package. Therefore a corrosion test was carried out in the form of a TNO and bending stress test. In this test it could be shown that the used compounds like polyoxyethylen sorbitanmonolaurate, polyoxyethylen sorbitanmonooleate and n-alkansulfonate do not show any corrosion effect on PET.

### 4.) Test on different polymeric plastic materials

The compounds described in table I were also tested on different polymer materials. It was found that the different plastic materials had different physical behavior regarding the conditioning effect. Polymeric materials made of PVC, PVDF, PE/LD, PE/HD, PP and PET were tested on the grade of dust attraction. It was found that after treatment with the conditioning agent especially the PET surfaces were very clean while for example the surfaces of polymer material PVC, PE/LD and PE/HD showed no effect.

### 5.) Labeling debonding

According to F&B Europe R&D test method 53, labeling debonding was done. The period of labeling debonding is a measure to evaluate the cleaning performance of additives, which are used in bottle washers for glass and plastic bottles.

PET bottles are labeled to measure the time which is needed for label debonding. Three types of bottles are measured A) untreated PET-bottles, B) PET-bottles treated with conditioning agent and C) PET-bottle treated with W/O-Emulsion.

**Table 3**

| A) Standard (time in min:sec) | B) Treated with conditioning agent (time in min:sec) | C) Treated with W/O emulsion (time in min:sec) |
|---|---|---|
| 1:40 | 1:36 | 1:44 |
| 1:33 | 1:53 | 1:35 |
| 2:05 | 1:44 | 1:28 |
| 1:48 | 1:34 | 1:40 |
| 1:55 | 1:41 | 1:23 |
| 1:33 to 2:05 | 1:34:1:53 | 1:23:1:44 |

The test showed that the conditioning agent does not influence the labeling process, but influences the labeling debonding into the bottle washer.

The W/O emulsion are currently used at some customers to avoid an electricity charge. The emulsion produces an oil layer on the surface of the preform and the oil layer decomposes due to high temperature in the blow molding machine and leads to carbonization of the organic components. The carbon particles deposit on the IR-bulbs and mirrors used for heating of the preform which causes a decrease of the energy distribution and an increased maintenance on the IR-bulb and mirrors. The labeling process is also negatively influenced due to the oil layer. A bottle label will not adhere on the basis of the oil layer on the bottle.

## Claims

1. A method of conditioning thermoplastic polymer packages, which are molded from thermoplastic preforms comprising the steps of:
a) providing a solution with 0.1 to 15.0 wt-% of an antistatic composition
b) contacting the thermoplastic preform with the antistatic composition on the outer surface,
c) blow molding the molded package from the preform by a molding process directly after steps a) and b) or alternatively in a later separate process step.

2. A method according to claim 1 wherein the antistatic composition is a solution of a compound selected from the group consisting of sorbitan esters, polysorbates, alkylsulfonates or mixtures thereof.

3. A method according to claim 2, wherein the solution is an aqueous solution.

4. A method according to claim 1, wherein the preform is contacted with the antistatic composition by spraying it onto the surface of the preform.

5. A method according to claim 4, wherein the spraying is carried out by means of jet nozzles.

6. A method according to claim 1, wherein the preform is contacted with the antistatic composition by dipping the preform into the solution of the antistatic composition.

7. A method according to claim 1, wherein the package is a hollow body, which is used to store fluids or solid products.

8. A method according to claim 1, wherein the preform is a hollow body.

9. A method according to claim 1, wherein the thermoplastic polymer is a poly-condensation polymer or a polyaddition polymer.

10. A method according to claim 9, wherein the polymer is selected from the group consisting of poly(ethylene terephthalate), poly(ethylen naphthalate), poly(butylen terephthalate), polycarbonate, polystyrene, or polyvinylchloride or copolymers thereof.

11. A method according to claim 2, wherein the sorbitan ester is a mono-, di-, tri- or sesquisorbitan ester of a fatty acid having one or more C₈-C₁₈ alkyl groups and/or C₈-C₁₈ alkenyl groups.

12. A method according to claim 11, wherein the sorbitan ester is selected from the group consisting of sorbitan monostearate, sorbitan tristearate, sorbitan monolaurate, sorbitan monooleate, sorbitan palmitate or mixtures thereof.

13. A method according to claim 2, wherein the polysorbate is a ethoxylated mono- , di-, sesqui-, or trisorbitan ester having 1 to 30 ethylenoxid units and saturated or non-saturated C₆-C₂₂ acyl groups.

14. A method according to claim 13, wherein the polysorbate is selected from the group consisting of polyoxyethylen sorbitan monolaurate, polyoxyethylen sorbitan monopalmitate, polyoxyethylen sorbitan monostearate, polyoxyethylen sorbitan monooleate, polyoxyethylen sorbitan tristearate, polyoxyethylen sorbitan trioelate or mixtures thereof.

15. A method according to claim 2, wherein the alkyl sulfonate is a n-alkyl sulfonate.

16. A method according to claim 1, wherein the antistatic composition contains 0.05 to 70.0 wt-% of an organic or inorganic acid, preferably formic acid, as a preservative.

17. Use of a solution comprising 0.1 to 15.0 wt-% of an antistatic composition for the conditioning treatment of polyester molds and/or polyester preforms.

18. Use according to claim 17, wherein the composition comprises a compound selected from the group consisting of sorbitan esters, polysorbates, alkylsulfonates or mixtures thereof.

19. Use according to claim 17, wherein the polyester is selected from the group consisting of poly(ethylene terephthalate), poly(ethylen naphthalate), poly(butylen terephthalate), polycarbonate.

20. Use according to claim 18, wherein the sorbitan ester is a mono-, di-, sesqui- or trisorbitan ester of a fatty acid having one or more C₈-C₁₈ alkyl groups and/or a C₈-C₁₈ alkenyl groups.

21. Use according to claim 20, wherein the sorbitan ester is selected from the group consisting of sorbitan monostearate, sorbitan tristearate, sorbitan monolaurate, sorbitan monooleate, sorbitan palmitate or mixtures thereof.

22. Use according to claim 18, wherein the polysorbate is a ethoxylated mono-, di-, sesqui-, or trisorbitan ester having 1 to 30 ethylenoxid units and one or more saturated or non-saturated C₆-C₂₂ acyl groups.

23. Use according to claim 22, wherein the polysorbate is selected from the group consisting of polyoxyethylen sorbitan monolaurate, polyoxyethylen sorbitan monopalmitate, polyoxyethylen sorbitan monostearate, polyoxyethylen sorbitan monooleate, polyoxyethylen sorbitan tristearate, polyoxyethylen sorbitan trioelate or mixtures thereof.

24. Use according to claim 18, wherein the alkyl sulfonate is a n-alkyl sulfonate.

25. Use according to anyone of claim 17, wherein the antistatic composition contains 0.05 to 70.0 wt-% of an organic or inorganic acid, preferably formic acid, as a preservative..
